(19) Europäisches Patentamt
European Patent Office
Office européen des brevets

(11) **EP 3 873 707 B1**

(12) **EUROPÄISCHE PATENTSCHRIFT**

(45) Veröffentlichungstag und Bekanntmachung des Hinweises auf die Patenterteilung:
**24.01.2024   Patentblatt 2024/04**

(21) Anmeldenummer: **19797237.5**

(22) Anmeldetag: **29.10.2019**

(51) Internationale Patentklassifikation (IPC):
***B26D 3/08*** (2006.01)    ***B26D 5/00*** (2006.01)

(52) Gemeinsame Patentklassifikation (CPC):
**B26D 5/00; B23K 26/0006; B23K 26/048;
B23K 26/0884; B23K 26/359; B23K 26/364;
B23K 26/402; B26D 3/08; B26D 5/30;**
B23K 2101/006; B23K 2101/18; B23K 2103/42

(86) Internationale Anmeldenummer:
**PCT/EP2019/079496**

(87) Internationale Veröffentlichungsnummer:
**WO 2020/089210 (07.05.2020 Gazette 2020/19)**

(54) **SCHNEIDVORRICHTUNG UND SCHNEIDVERFAHREN**

CUTTING APPARATUS AND CUTTING METHOD

DISPOSITIF DE COUPE ET PROCÉDÉ DE COUPE

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **29.10.2018   DE 102018218469**

(43) Veröffentlichungstag der Anmeldung:
**08.09.2021   Patentblatt 2021/36**

(73) Patentinhaber: FRIMO Group GmbH
**49504 Lotte (DE)**

(72) Erfinder:
• **DRISKES, Christian**
  **41334 Nettetal Lobberich (DE)**
• **PEKAL, Christoph**
  **49082 Osnabrück (DE)**

(74) Vertreter: **Hoffmann Eitle
Patent- und Rechtsanwälte PartmbB
Arabellastraße 30
81925 München (DE)**

(56) Entgegenhaltungen:
EP-A1- 1 566 314       EP-B1- 1 566 314
DE-A1-102009 054 604   DE-B4-102009 054 604
DE-U1- 20 314 281

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

**Technisches Gebiet**

Die Erfindung betrifft eine Schneidvorrichtung sowie ein Schneidverfahren, mit der oder dem rein beispielhaft eine Schwächung in eine Instrumententafel eines Fahrzeugs eingebracht werden kann. Im Falle einer Kollision kann die Instrumententafel im Bereich der Schwächung kontrolliert geöffnet und ein Airbag durch die Instrumententafel entfaltet werden. Mit der Schneidvorrichtung können jedoch auch andere Werkstücke bearbeitet werden.

**Stand der Technik**

Im Stand der Technik sind bisher zwei Verfahrensschritte vorgesehen, um einen geschwächten Bereich in einer Instrumententafel oder einem ähnlichen Bauteil vorzusehen. In einem dieser Schritte wird eine Schwächung in eine an einem Instrumententräger anzubringende Haut, wie eine Slushhaut, Spritzsprühhaut oder Gießhaut, eingebracht.

In diesem Zusammenhang ist beispielsweise aus der DE 202 15 558 U1 ein Schneidwerkzeug offenbart, das zur Überwachung der Schnitttiefe des Schneidmessers eingerichtet ist. Dabei ist es vorgesehen, dass das Schneidwerkzeug eine Schnitttiefenerkennungsvorrichtung mit einer Lichtquelle für einen Lichtstrahl hoher Intensität und mit einem Sensor aufweist, über den laufend die horizontale Fahrbewegung und die Eindringtiefe des Schneidmessers in das Material über die Messung der Intensität des aus dem Material der Restwand im Bereich der Schnittstelle austretenden Lichtstrahles eines dem Schnittbereich zugeführten Lichtstrahles von hoher Intensität gesteuert wird.

Als weiteres Dokument ist die FR 2 965 502 A1 bekannt, die ein Verfahren und eine Vorrichtung zeigt, um eine Schwächung für einen Airbag zu generieren. Die Vorrichtung weist einen Arbeitsbereich, ein Schneidwerkzeug und einen Messsensor auf. Der Sensor ist ein laser-optischer Sensor. Der Sensor ist stationär ausgebildet und misst den Abstand zum zu bearbeitenden Werkstück. Eine Bewegungsvorrichtung kann das Schneidwerkzeug entlang einer Achse hin und her verfahren. Die verbleibende Schichtdicke wird durch eine Differenzberechnung ermittelt.

Allerdings ist es zunehmend erforderlich, die Wirtschaftlichkeit bei der Bearbeitung von Bauteilen zu steigern und dabei wachsende Qualitätsanforderungen zu erfüllen. Eine dieser Qualitätsanforderung ist die präzise Einhaltung und Dokumentation der Restwandstärke.

In der EP 1 566 314 A1 wird ein Verfahren zum Herstellen einer Airbag-Abdeckung und eine entsprechende Ultraschall-Verarbeitungsvorrichtung beschrieben.

Ferner ist das Dokument DE 203 14 281 U1 bekannt, das ein Schneidwerkzeug zur in-process-Regelung der Restwandstärke bei der Airbagschwächung offenbart.

Die Veröffentlichung DE 10 2009 054 604 A1 betrifft eine Vorrichtung zum teilweisen Durchtrennen eines Werkstücks, welche bevorzugt zumindest abschnittsweise aus natürlichem oder künstlichem Leder, Kunststoff oder dergleichen besteht, wobei die Vorrichtung ein auf einer Bearbeitungsfläche angeordnetes Werkstück und eine beweglich angeordnete Aufnahme, an der eine zur Bearbeitung des Werkstücks ausgebildete, bewegliche Schneideinrichtung angeordnet ist, umfasst.

**Gegenstand der Erfindung**

Die Erfindung zielt demnach darauf ab, die Fertigung für ein Werkstück mit einem Schwächungsbereich bei zumindest gleichbleibender oder gar gesteigerter Qualität zu vereinfachen.

Der Gegenstand des Anspruchs 1 stellt entsprechend eine solche Schneidvorrichtung bereit. Weitere bevorzugte Ausführungsformen sind in den abhängigen Ansprüchen oder nachfolgend aufgeführt. Ferner betrifft die Erfindung ein Verfahren. Die Schneidvorrichtung oder eine ihrer bevorzugten Ausführungsformen kann im Rahmen des Verfahrens eingesetzt werden. Ferner kann die Schneidvorrichtung eingerichtet sein, das Verfahren oder eine bevorzugte Ausführungsform des Verfahrens auszuführen.

Die erfindungsgemäße Schneidvorrichtung hat unter anderem den Vorteil, dass mit dieser auch vergleichsweise dickwandige und/oder komplexe Werkstücke in hochwertiger Weise bearbeitet werden können. Der Bearbeitungsvorgang kann hierbei in einem Schritte durchgeführt werden, so dass die Anschaffungskosten für eine entsprechende Anlage reduziert werden können. Im Zuge der Bearbeitung kann ferner eine Spanabsaugung vorgesehen sein, die beispielsweise durch eine druckluftunterstützte Reinigungsfunktion erweitert ist.

Beispielsweise kann die Schneidvorrichtung eingesetzt werden, um einen Schwächungsbereich (Schwächungslinie) in eine geschäumte Instrumententafel für einen PKW einzubringen, die für einen Airbag eine Sollbruchstelle darstellen kann.

Gemäß einer Ausführungsform ist es vorgesehen, dass die Schneideinheit einen Roboterarm umfasst, insbesondere eines 4-Achs-Roboterarm, weiter bevorzugt eines 5-Achs-Roboterarm, besonders bevorzugt eines 6-Achs-Roboterarm. Somit kann das Einsatzspektrum je nach Anwendungsfall ggf. erweitert werden.

An der Schneideinheit kann eine Schneideinrichtung vorgesehen sein. Eine solche Schneideinrichtung kann zur Durchführung einer spanenden Bearbeitung oder einer spanlosen Bearbeitung vorgesehen sein. In einer weiteren Ausführungsform ist vorgesehen, dass die Schneideinrichtung ein Fräswerkzeug, eine oszillierende oder eine rotierende Klinge, eine Ziehklinge oder einen Laser aufnimmt.

In einer weiteren Ausführungsform ist die Schneidvorrichtung derart ausgestaltet, dass die Schneidvorrichtung eine Messstation umfasst, die zur Ermittlung einer Länge eingerichtet ist, wobei die Länge den Abstand zwischen der Spitze eines von der Schneideinrichtung aufgenommenen Schneidwerkzeuges und dem Abstandsmesssensor definiert. Somit können beispielsweise nach einem Wechsel eines Werkzeuges oder der Schneideinrichtung definierte Maße ermittelt werden, so dass eine hohe Bearbeitungsgüte sichergestellt wird. Auch kann beispielsweise der Abnutzungsgrad eines Werkzeuges berücksichtigt werden.

Im Bereich der Schneidvorrichtung kann ferner ein Werkzeugspeicher zur Aufnahme von Schneidwerkzeugen vorgesehen sein. Somit kann ein Werkzeugwechsel, und damit eine entsprechende Flexibilität der Schneidvorrichtung, sichergestellt werden.

Eine Ausführungsform kennzeichnet sich dadurch, dass die Schneidvorrichtung eine Steuereinrichtung aufweist, die eingerichtet ist, eine Restwandstärke auf Grundlage folgender Formel zu ermitteln: $R_{w\,f(x,y)} = M_{const.\,f(x,y)} - (K_f + A_{m\,f(x,y)})$. Dabei ist $R_{w\,f(x,y)}$ die positionsbezogene Restwandstärke, $M_{const.\,f(x,y)}$ eine Konstante, $K_f$ der Abstand zwischen der Spitze eines von der Schneideinrichtung aufgenommenen Schneidwerkzeuges und dem Abstandsmesssensor und $A_{m\,f(x,y)}$ der vom Abstandsmesssensor ermittelte Abstand zur Messplatte ist. Somit können charakteristische Werte ermittelt werden, die im Rahmen des Bearbeitungsablaufs Berücksichtigung finden können und ein entsprechend hohes Bearbeitungsergebnis sicherstellen.

Ferner kann vorgesehen sein, dass die Steuereinrichtung eingerichtet ist, die Bewegung der Schneidvorrichtung derart zu steuern, dass die Restwandstärke während eines Bearbeitungsvorgangs konstant gehalten wird. Somit wird ein gleichmäßiges und qualitativ hochwertiges Arbeitsergebnis erreicht.

Die Schneidvorrichtung kann eine dreidimensional ausgebildete Auflage zur Aufnahme eines dreidimensional geformten Werkstücks aufweisen. Beispielsweise kann eine Instrumententafel aufgenommen und in einer Ausspannung bearbeitet werden.

Ferner betrifft die Erfindung ein Verfahren, mit dem eine Schwächung in ein Werkstück eingebracht werden soll. Im Rahmen des Verfahrens kommt eine Schneidvorrichtung zum Einsatz, die aufweist: eine Schneideinheit sowie eine Messplatte aufweist, wobei die Schneideinheit eine Aufnahmeeinrichtung zum Halten einer Schneideinrichtung sowie einen Abstandsmesssensor aufweist, wobei die Schneideinheit unter Berücksichtigung des durch den Abstandsmesssensor ermittelten Abstands zur Messplatte anhand einer Steuerkurve bewegt wird. Das Verfahren kann dabei den Verfahrensschritt umfassen, wonach die Schneideinheit zum spanenden oder spanlosen Bearbeiten eines Werkstücks bewegt wird. Mit dem Verfahren können ebenfalls die bereits genannten Vorteile erreicht werden.

Die Schwächung kann dabei als durchgehende Vertiefung oder als perforationsartige Schwächung im Werkstück eingebracht werden. Dabei ist es bevorzugt, dass die Eindringtiefe konstant gehalten wird.

Zur Ermittlung der Steuerkurve kann eine Kalibrierfahrt durchgeführt werden, wobei zur Aufnahme der Steuerkurve ein induktiver Kalibriersensor in die Schneideinrichtung eingesetzt ist.

Im Rahmen des Verfahrens kann es vorgesehen sein, dass eine Restwandstärke auf Grundlage folgender Formel ermittelt wird:

$$RW_{f(x,y)} = M_{const.\,f(x,y)} - (K_f + A_{m\,f(x,y)}),$$

wobei RW f(x,y) die positionsbezogene Restwandstärke, Mconst. f(x,y) eine Konstate, Kf der Abstand zwischen der Spitze eines von der Schneideinrichtung aufgenommenen Schneidwerkzeuges und dem Abstandsmesssensor und Am f(x,y) der vom Abstandsmesssensor ermittelte Abstand zur Messplatte ist.

Die Bewegung der Schneidvorrichtung kann derart gesteuert werden, dass die Restwandstärke während eines Bearbeitungsvorgangs konstant gehalten wird. Somit wird ein qualitativ äußerst hochwertiges Arbeitsergebnis erreicht.

In einer weiteren Ausführungsform des Verfahrens ist es vorgesehen, dass das Werkstück ein geschäumtes Innenverkleidungsbauteil ist, insbesondere eine geschäumte Instrumententafel.

**Kurze Beschreibung der Zeichnungen**

Fig. 1    zeigt eine Ausführungsform einer erfindungsgemäßen Schneidvorrichtung.

Fig. 2    zeigt die in Fig. 1 dargestellte Schneidvorrichtung während der Bestimmung der Länge $K_f$ in einer Messstation.

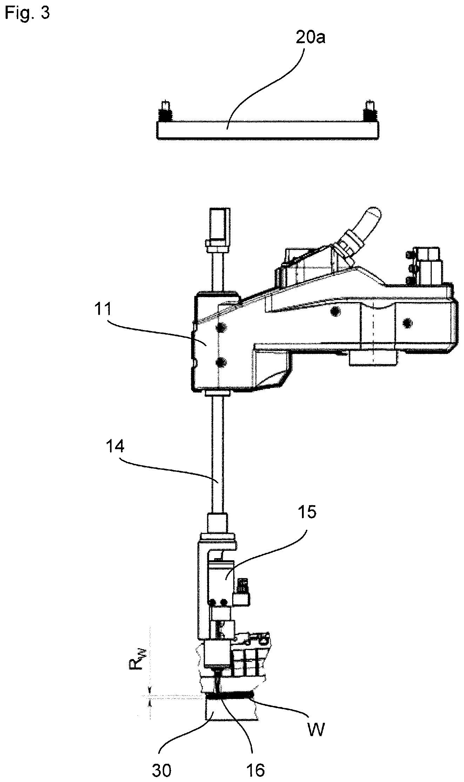

Fig. 3      veranschaulicht einen Bearbeitungsvorgang mit der Schneidvorrichtung gemäß Fig. 1.

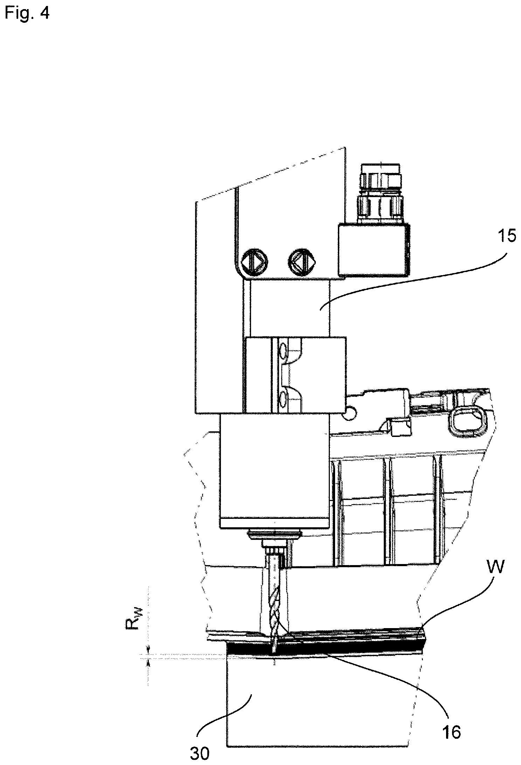

Fig. 4      ist eine vergrößerte Detailansicht von Fig. 3.

Fig. 5      zeigt die Schneidvorrichtung gemäß Fig. 1 während der Schwächung in X- und Y-Position auf der Schwächungslinie.

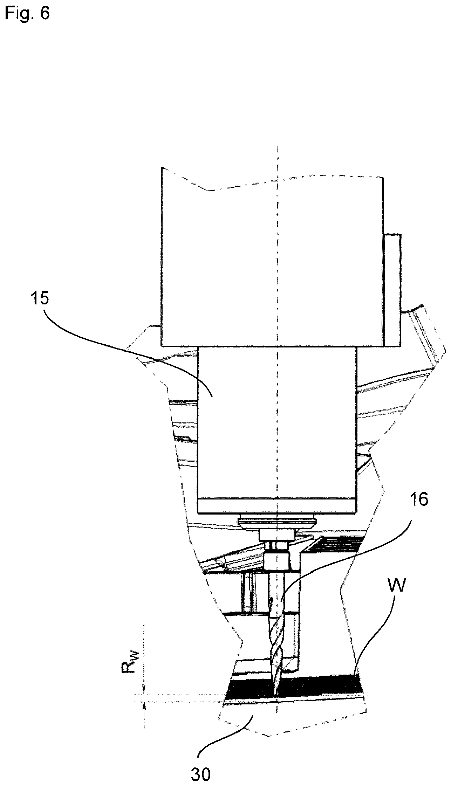

Fig. 6      ist eine vergrößerte Detailansicht von Fig. 5.

**Beschreibung der bevorzugten Ausführungsform**

Anhand der beigefügten Figuren wird nachfolgend eine bevorzugte Ausführungsform der Erfindung erläutert. In diesem Zusammenhang werden auch Modifikationen bestimmter Merkmale beschrieben. Diese Modifikationen können jeweils einzeln miteinander kombiniert werden, um weitere Ausführungsform der Erfindung auszubilden. Auch wenn die nachfolgend beschriebene Ausführungsform rein beispielhaft ist und der Veranschaulichung der Erfindung dient, können die in diesem Zusammenhang genannten Merkmale auch jeweils einzeln zur Spezifizierung der Erfindung herangezogen werden.

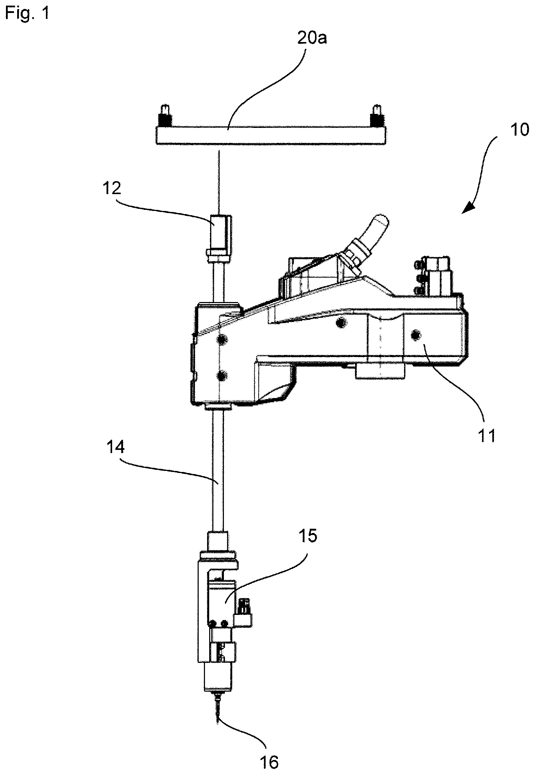

Fig. 1 zeigt eine Seitenansicht einer Schneidvorrichtung gemäß der Ausführungsform. Die Schneidvorrichtung umfasst eine Schneideinheit 10, eine Messplatte 20a und eine Auflage 30 zum Auflegen eines Werkstücks W.

Die Schneideinheit 10 weist einen Roboterarm 11 auf, der eine Pinole (Aufnahmeeinrichtung) 14 trägt. An einem zur Messplatte 20a weisenden Ende der Pinole 14 ist ein Abstandsmesssensor 12 angebracht, der eingerichtet ist, einen Abstand zur Messplatte 20a zu ermitteln. Am entgegengesetzten Ende der Pinole 14 ist eine Schneideinrichtung 15 vorgesehen, die in der vorliegenden Ausführungsform ein Fräswerkzeug 16 aufnimmt. Die Schneideinrichtung 15 kann auswechselbar oder fest an der Pinole 14 angebracht sein.

Das Fräswerkzeug 16 wird drehend bewegt, um ein Werkstück W mittels eines subtraktiven Verfahrens zu bearbeiten. Das Fräswerkzeug 16 kann anhand eines Werkzeugwechsels gegen ein anderes Werkzeug ausgetauscht werden, welches sich in einem Werkzeugspeicher (nicht dargestellt) der Schneidvorrichtung befindet. In diesem Zusammenhang ist es möglich, das Fräswerkzeug 16 gegen ein anderes Fräswerkzeug auszutauschen, oder in die Schneideinrichtung ein anderes Werkzeug einzuwechseln.

In der in Fig. 1 dargestellten Situation ist die Pinole 14 rechtwinklig zur durch die Messplatte 20a ausgebildeten Ebene ausgerichtet. Der durch den Abstandsmesssensor 12 ermittelte Abstand wird in Fig. 1 durch eine Linie zwischen dem Abstandsmesssensor 12 und der Messplatte 20a veranschaulicht.

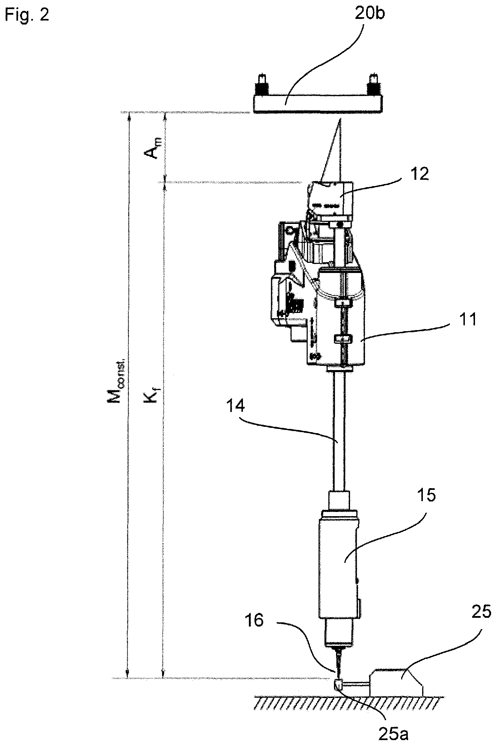

Da das Schneidwerkzeug 15 und/oder das Fräswerkzeug 16 austauschbar sind, werden vor Beginn eines Schneidvorgangs bestimmte Maße ermittelt. Hierzu wird die Schneideinheit 10 in eine Messstation bewegt (Fig. 2), wobei die Messstation eine Messplatte 20b aufweist, die ähnlich der Messplatte 20a ausgebildet ist. Die Messplatte 20b dient dabei als bekannte Referenz zur Ermittlung von Maßen. Die Messplatte 20a wiederum dient als Referenz während des Betriebs der Vorrichtung.

Ferner ist in der Messstation eine Messvorrichtung 25 vorgesehen, die ein Messelement 25a aufweist. Die Messvorrichtung 25 ist für einen taktilen Messvorgang eingerichtet. Neben einem taktilen Messvorgang kann die Messvorrichtung gemäß einer weiteren Ausführungsform auch für einen optischen Messvorgang eingerichtet sein.

In der Messstation wird zunächst die Länge $K_f$ ermittelt, welche den Abstand zwischen der Spitze des Fräswerkzeugs 16 und dem Abstandsmesssensor 12 definiert. Hierzu wird die Pinole 14 senkrecht zur Messplatte 20b ausgerichtet. Das Fräswerkzeug 16 wird in dieser Ausrichtung gegen das Messelement 25a bewegt, wobei der Abstand zwischen dem Messelement 25a und der Messplatte 20b eine Referenzlänge darstellt. Durch Messung des Abstands zwischen dem Abstandssensor 12 und der Messplatte 20b kann somit indirekt die Länge $K_f$ ermittelt werden.

Zur Ermittlung der Länge $K_f$ wird die folgende Formel verwendet:

$$\text{(Formel 1)} \qquad K_f = M_{const.} - A_m$$

wobei $M_{const.\,f(x,y)}$ eine Konstante ist, die vorrichtungsspezifisch vorgegeben ist, und der Abstand $A_m$ durch den Abstandsmesssensor 12 ermittelt wird.

Die in der Messstation durchgeführte Messung wird jeweils nach einem Werkzeugwechsel durchgeführt, um die aktuelle Länge $K_f$ zu bestimmen. Darüber hinaus kann diese Messung auch nach einem Schneidvorgang stattfinden, um mögliche äußere Einwirkungen auf die Schneideinrichtung 15 präzise berücksichtigen zu können. Somit kann während eines Schneidvorgangs eine äußerst exakte Erfassung und Dokumentation der Schnitttiefe erfolgen.

Durch die Vermessung der Länge $K_f$ wird auch der Zustand des Fräswerkzeugs 16 (oder eines anderen an der Schneidvorrichtung vorgesehenen Schneidwerkzeugs) in Z-Richtung geprüft. Jede Abweichung kann beispielsweise zur Folge haben, dass das gerade bearbeitete Werkstück als Ausschuss deklariert und markiert wird.

Im Betrieb kann somit durch Kenntnis der Länge $K_f$ die im Werkstück vorliegende Restwandstärke ($R_w$) ermittelt und während des Bearbeitungsvorgangs dokumentiert werden. Hierbei wird während der Bearbeitung der Abstand des Abstandsmesssensors 12 zur Messplatte 20a gemäß einer Steuerkurve regelt, sodass die Bahn des Fräswerkzeugs 16 einen konstanten Abstand zu einer Aufnahme 30, auf der das Werkstück W aufgelegt ist, einhält. Auf diese Weise können die Restwandstärke ($R_w$) konstant gehalten und ferner die hierfür erhobenen Daten dokumentiert werden.

Zur Ermittlung der Restwandstärke wird die nachfolgend eingefügte Formel verwendet:

$$(\text{Formel 2}) \qquad R_{W\ f(x,y)} = M_{const.\ f(x,y)} - (K_f + A_{m\ f(x,y)}).$$

wobei $M_{const.\ f(x,y)}$ eine Konstante ist, die sich aus der Kalibrierfahrt/Vermessungsverfahrt ergibt und von der Funktion der Lage der Schneidvorrichtung auf der Schwächungslinie f(x,y) abhängig ist. Der $A_{m\ f(x,y)}$-Abstand wird durch den Längenmesssensor Pos. 2 in der X- und Y-Position der Schneidvorrichtung gemessen.

Vor einem Bearbeitungsvorgang wird einmalig eine Kalibrierfahrt durchgeführt, um eine Steuerkurve zu bestimmen, die zur Regelung der Restwandstärke $R_{W\ f(x,y)}$ verwendet wird. Zur Aufnahme der Steuerkurve wird ein induktiver Kalibriersensor (in den Figuren nicht gezeigt) anstelle des Fräswerkzeuges 16 in die Schneideinrichtung 15 eingesetzt. Der induktive Kalibriersensor wird entlang der Schwächungslinie bewegt und auf konstanten Abstand geregelt. Der Abstand $A_{m\ f(x,y)}$ wird als Steuerkurve erfasst.

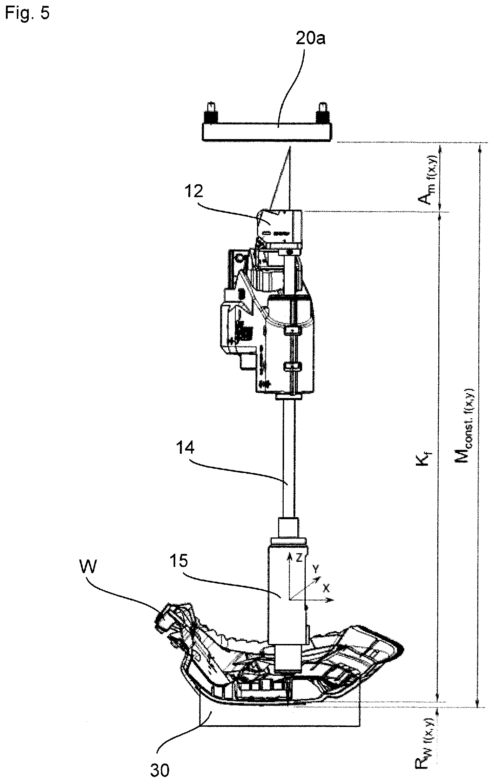

In Fig. 5 wird die Bearbeitung eines auf der Auflage 30 aufgelegten Werkstücks W, welches eine dreidimensionale Kontur definiert, anschaulich dargestellt. In diesem Zusammenhang wird die Restwandstärke als Ist-Maß indirekt ermittelt, und mit der Soll-Restwandstärke abgeglichen.

Bei der Bearbeitung des Werkstücks W wird der Abstand des Abstandsmesssensors 12 zur Messplatte 20a gemäß der Steuerkurve geregelt, so dass die Bahn des Fräswerkzeuges 16 einen konstanten Abstand zur Auflage 30 hält ($R_W$ = konstant). Die Steuerkurve entspricht dabei nicht dem Schwächungslinienverlauf bzw. stellt keine Funktion von ihr dar, da die Steuerkurve einem dreidimensionalen Verlauf folgt.

Auch wenn in der in den Figuren dargestellten Ausführungsform ein Fräswerkzeug 16 zur Bearbeitung des Werkstücks W eingesetzt wird, können gemäß weiterer Ausführungsformen eine spanende oder eine spanlose Bearbeitung durchgeführt werden. Gemäß weiterer Ausführungsformen kann beispielsweise anstelle des Fräswerkzeuges auch eine oszillierende oder eine rotierende Klinge oder eine Ziehklinge eingesetzt werden, um die Schwächung in das Werkstück W einzubringen. Auch ein Laser ist denkbar. Ferner kann die beschriebene Schwächung des Werkstücks W als durchgehende Vertiefung im Werkstück oder als perforationsartige Schwächung eingebracht werden.

Das beschriebene Schneidverfahren wird beispielsweise eingesetzt, um eine Schwächung an einer geschäumten Instrumententafel einzubringen, die sich aus einer Haut und einem Träger zusammensetzt. Allerdings ist die Erfindung nicht auf die Verwendung der Schneidvorrichtung bei der Bearbeitung einer Instrumententafel beschränkt, sondern kann auch für andere Verbundmaterialien eingesetzt werden.

**Patentansprüche**

1. Schneidvorrichtung, umfassend:

   eine Schneideinheit (10), wobei die Schneideinheit (10) eine Aufnahmeeinrichtung (14) zum Halten einer Schneideinrichtung (15) sowie einen Abstandsmesssensor (12) aufweist,
   eine Messplatte (20a), wobei der Abstandsmesssensor (12) einen Abstand zur Messplatte (20a) ermitteln kann, wobei die Schneideinheit (10) unter Berücksichtigung des durch den Abstandsmesssensor (12) ermittelten Abstands zur Messplatte (20a) anhand einer Steuerkurve bewegt werden kann,
   **dadurch gekennzeichnet , dass**
   der Abstandsmesssensor (12) an einem zur Messplatte (20a) weisenden Ende der Aufnahmeeinrichtung (14) angebracht ist, und die Schneideinrichtung (15) am entgegengesetzten Ende der Aufnahmeeinrichtung (14) vorgesehen ist.

2. Schneidvorrichtung gemäß Anspruch 1, **dadurch gekennzeichnet, dass** die Schneideinheit (10) einen Roboterarm (11) umfasst, insbesondere eines 4-Achs-Roboterarm, weiter bevorzugt eines 5-Achs-Roboterarm, besonders bevorzugt eines 6-Achs-Roboterarm.

3. Schneidvorrichtung gemäß einem der vorangegangenen Ansprüche, **dadurch gekennzeichnet, dass** an der Schneideinheit (10) eine Schneideinrichtung (15) vorgesehen ist, wobei bevorzugt ist, dass die Schneideinrichtung (15) ein Fräswerkzeug (16), eine oszillierende oder eine rotierende Klinge, eine Ziehklinge oder einen Laser aufnimmt.

4. Schneidvorrichtung gemäß einem der vorangegangenen Ansprüche, **dadurch gekennzeichnet, dass** die Schneidvorrichtung eine Messstation umfasst, die zur Ermittlung einer Länge ($K_f$) eingerichtet ist, wobei die Länge ($K_f$) den Abstand zwischen der Spitze eines von der Schneideinrichtung aufgenommenen Schneidwerkzeuges (16) und dem Abstandsmesssensor (12) definiert.

5. Schneidvorrichtung gemäß einem der vorangegangenen Ansprüche, ferner umfassend einen Werkzeugspeicher zur Aufnahme von Schneidwerkzeugen.

6. Schneidvorrichtung gemäß einem der vorangegangenen Ansprüche, **dadurch gekennzeichnet, dass** die Schneidvorrichtung eine Steuereinrichtung aufweist, die eingerichtet ist, eine Restwandstärke auf Grundlage folgender Formel zu ermitteln:

$$R_{W\ f(x,y)}\ =\ M_{const.\ f(x,y)}\ -\ (K_f\ +\ A_{m\ f(x,y)}),$$

wobei $R_{W\,f(x,y)}$ die positionsbezogene Restwandstärke, $M_{const.\,f(x,y)}$ eine Konstate, $K_f$ der Abstand zwischen der Spitze eines von der Schneideinrichtung aufgenommenen Schneidwerkzeuges (16) und dem Abstandsmesssensor (12) und $A_{m\,f(x,y)}$ der vom Abstandsmesssensor (12) ermittelte Abstand zur Messplatte (20a) ist.

7. Schneidvorrichtung gemäß einem der vorangegangenen Ansprüche, **dadurch gekennzeichnet, dass** die Steuereinrichtung eingerichtet ist, die Bewegung der Schneidvorrichtung derart zu steuern, dass die Restwandstärke während eines Bearbeitungsvorgangs konstant gehalten wird.

8. Schneidvorrichtung gemäß einem der vorangegangenen Ansprüche, **dadurch gekennzeichnet, dass** die Schneidvorrichtung eine dreidimensional ausgebildete Auflage (30) zur Aufnahme eines dreidimensional geformten Werkstücks (W) aufweist.

9. Verfahren zum Einbringen einer Schwächung in ein Werkstück (W), unter Verwendung einer Schneidvorrichtung, wobei die Schneidvorrichtung eine Schneideinheit (10) sowie eine Messplatte (20a) aufweist,

wobei die Schneideinheit (10) eine Aufnahmeeinrichtung (14) zum Halten einer Schneideinrichtung (15) sowie einen Abstandsmesssensor (12) aufweist,
wobei die Schneideinheit (10) unter Berücksichtigung des durch den Abstandsmesssensor (12) ermittelten Abstands zur Messplatte (20a) anhand einer Steuerkurve bewegt wird,
**dadurch gekennzeichnet, dass**
der Abstandsmesssensor (12) an einem zur Messplatte (20a) weisenden Ende der Aufnahmeeinrichtung (14) angebracht ist, und die Schneideinrichtung (15) am entgegengesetzten Ende der Aufnahmeeinrichtung (14) vorgesehen ist.

10. Verfahren gemäß Anspruch 9, **dadurch gekennzeichnet, dass** die Schwächung als durchgehende Vertiefung oder als perforationsartige Schwächung im Werkstück (W) eingebracht wird.

11. Verfahren gemäß einem der Ansprüche 9-10, **dadurch gekennzeichnet, dass** zur Ermittlung der Steuerkurve eine Kalibrierfahrt durchgeführt, wobei zur Aufnahme der Steuerkurve ein induktiver Kalibriersensor in die Schneideinrichtung (15) eingesetzt ist.

12. Verfahren gemäß einem der Ansprüche 9-11, **dadurch gekennzeichnet, dass** eine Restwandstärke auf Grundlage folgender Formel ermittelt wird:

$$R_{W\ f(x,y)}\ =\ M_{const.\ f(x,y)}\ -\ (K_f\ +\ A_{m\ f(x,y)}),$$

wobei $R_{W\,f(x,y)}$ die positionsbezogene Restwandstärke, $M_{const.\,f(x,y)}$ eine Konstate, $K_f$ der Abstand zwischen der Spitze eines von der Schneideinrichtung aufgenommenen Schneidwerkzeuges (16) und dem Abstandsmesssensor (12) und $A_{m\,f(x,y)}$ der vom Abstandsmesssensor (12) ermittelte Abstand zur Messplatte (20a) ist.

**13.** Verfahren gemäß Anspruch 12, **dadurch gekennzeichnet, dass** die Bewegung der Schneidvorrichtung derart gesteuert wird, dass die Restwandstärke während eines Bearbeitungsvorgangs konstant gehalten wird.

**14.** Verfahren gemäß einem der Ansprüche 9-13, **dadurch gekennzeichnet, dass** das Werkstück (W) ein geschäumtes Innenverkleidungsbauteil ist, insbesondere eine geschäumte Instrumententafel.

**Claims**

**1.** A cutting device, comprising:

a cutting unit (10), wherein the cutting unit (10) has an accommodation arrangement (14) for holding a cutting arrangement (15) and a distance measuring sensor (12),
a measuring plate (20a), wherein the distance measuring sensor (12) can determine a distance to the measuring plate (20a),
wherein the cutting unit (10) can be moved by means of a control curve, taking into account the distance to the measuring plate (20a) determined by the distance measuring sensor (12),
**characterised in that** the distance measuring sensor (12) is arranged at an end of the accommodation arrangement (14) pointing towards the measuring plate (20a), and the cutting arrangement (15) is provided at the opposite end of the accommodation arrangement (14).

**2.** The cutting device according to claim 1, **characterised in that** the cutting unit (10) comprises a robot arm (11), in particular a 4-axis robot arm, more preferably a 5-axis robot arm, particularly preferably a 6-axis robot arm.

**3.** The cutting device according to one of the preceding claims, **characterised in that** a cutting arrangement (15) is provided on the cutting unit (10), wherein it is preferred that the cutting arrangement (15) accommodates a milling tool (16), an oscillating or a rotating blade, a scraper or a laser.

**4.** The cutting device according to one of the preceding claims, **characterised in that** the cutting device comprises a measuring station arranged to determine a length ($K_f$), wherein the length ($K_f$) defines the distance between the tip of a cutting tool (16) accommodated by the cutting arrangement and the distance measuring sensor (12).

**5.** The cutting device according to any one of the preceding claims, further comprising a tool store for accommodation of cutting tools.

**6.** The cutting device according to one of the preceding claims, **characterised in that** the cutting device has a controller which is arranged to determine a residual wall thickness on the basis of the following formula:

$$R_{w\,f(x,y)} = M_{const.\,f(x,y)} - (K_f + A_{m\,f(x,y)}),$$

wherein $R_{w\,f\,(x,y)}$ is the position-related residual wall thickness, $M_{const.\,f(x,\,y)}$ is a constant, $K_f$ is the distance between the tip of a cutting tool (16) accommodated by the cutting arrangement and the distance measuring sensor (12) and $A_{m\,f(x,y)}$ is the distance to the measuring plate (20a) determined by the distance measuring sensor (12).

**7.** The cutting device according to one of the preceding claims, **characterised in that** the controller is arranged to control the movement of the cutting device in such a way that the residual wall thickness is kept constant during a processing operation.

**8.** The cutting device according to one of the preceding claims, **characterised in that** the cutting device has a three-dimensionally designed support (30) for accommodation of a three-dimensionally shaped workpiece (W).

**9.** A method for introducing a weakening into a workpiece (W), using a cutting device, wherein the cutting device has a cutting unit (10) and a measuring plate (20a),

wherein the cutting unit (10) has an accommodation arrangement (14) for holding a cutting arrangement (15) and a distance measuring sensor (12),
wherein the cutting unit (10) is moved by means of a control curve, taking into account the distance to the measuring plate (20a) determined by the distance measuring sensor (12),
**characterised in that** the distance measuring sensor (12) is arranged at an end of the accommodation arrangement (14) pointing towards the measuring plate (20a), and the cutting arrangement (15) is provided at the opposite end of the accommodation arrangement (14).

10. The method according to claim 9, **characterised in that** the weakening is introduced as a continuous depression or as a perforation-like weakening in the workpiece (W).

11. The method according to one of claims 9-10, **characterised in that** a calibration run is performed to determine the control curve, wherein an inductive calibration sensor is inserted into the cutting arrangement (15) to record the control curve.

12. The method according to one of claims 9-11, **characterised in that** a residual wall thickness is determined on the basis of the following formula:

$$R_{w\,f(x,y)} = M_{const.\,f(x,y)} - (K_f + A_{m\,f(x,y)}),$$

wherein $R_{w\,f(x,y)}$ is the position-related residual wall thickness, $M_{const.\,f(x,y)}$ is a constant, $K_f$ is the distance between the tip of a cutting tool (16) accommodated by the cutting arrangement and the distance measuring sensor (12) and $A_{m\,f(x,y)}$ is the distance to the measuring plate (20a) determined by the distance measuring sensor (12).

13. The method according to claim 12, **characterised in that** the movement of the cutting device is controlled in such a way that the residual wall thickness is kept constant during a processing operation.

14. The method according to one of claims 9-13, **characterised in that** the workpiece (W) is a foamed interior trim component, in particular a foamed instrument panel.

**Revendications**

1. Dispositif de coupe comprenant :

   une unité de coupe (10), dans lequel l'unité de coupe (10) présente un dispositif de réception (14) pour le maintien d'un dispositif de coupe (15) ainsi qu'un capteur de mesure de distance (12),
   une plaque de mesure (20a), dans lequel le capteur de mesure de distance (12) peut déterminer une distance par rapport à la plaque de mesure (20a),
   dans lequel l'unité de coupe (10) peut être déplacée en tenant compte de la distance déterminée par le capteur de mesure de distance (12) par rapport à la plaque de mesure (20a) à l'aide d'une came de commande,
   **caractérisé en ce que** le capteur de mesure de distance (12) est monté à une extrémité tournée vers la plaque de mesure (20a) du dispositif de réception (14), et le dispositif de coupe (15) est prévu à l'extrémité opposée du dispositif de réception (14).

2. Dispositif de coupe selon la revendication 1, **caractérisé en ce que** l'unité de coupe (10) comprend un bras de robot (11), en particulier un bras de robot à 4 axes, de manière davantage préférée un bras de robot à 5 axes, de manière particulièrement préférée un bras de robot à 6 axes.

3. Dispositif de coupe selon l'une quelconque des revendications précédentes, **caractérisé en ce qu'**un dispositif de coupe (15) est prévu au niveau de l'unité de coupe (10), dans lequel il est préféré que le dispositif de coupe (15) reçoive un outil de fraisage (16), une lame oscillante ou une lame rotative, un racloir ou un laser.

4. Dispositif de coupe selon l'une quelconque des revendications précédentes, **caractérisé en ce que** le dispositif de coupe comprend une station de mesure qui est conçue pour déterminer une longueur ($K_f$), dans lequel la longueur ($K_f$) définit la distance entre la pointe d'un outil de coupe (16) reçu par le dispositif de coupe et le capteur de mesure de distance (12).

5. Dispositif de coupe selon l'une quelconque des revendications précédentes, comprenant en outre un magasin d'outils pour la réception d'outils de coupe.

**6.** Dispositif de coupe selon l'une quelconque des revendications précédentes, **caractérisé en ce que** le dispositif de coupe présente un dispositif de commande qui est conçu afin de déterminer une épaisseur de paroi résiduelle sur la base de la formule suivante :

$$R_{w\,f(x,y)} = M_{const.\,f(x,y)} - (K_f + A_{m\,f(x,y)}),$$

dans lequel $R_{w\,f(x,y)}$ est l'épaisseur de paroi résiduelle liée à la position, $M_{const.\,f(x,\,y)}$ est une constante, $K_f$ est la distance entre la pointe d'un outil de coupe (16) reçu par le dispositif de coupe et le capteur de mesure de distance (12) et $A_{m\,f(x,y)}$ est la distance déterminée par le capteur de mesure de distance (12) par rapport à la plaque de mesure (20a).

**7.** Dispositif de coupe selon l'une quelconque des revendications précédentes, **caractérisé en ce que** le dispositif de commande est conçu afin de commander le mouvement du dispositif de coupe de telle manière que l'épaisseur de paroi résiduelle soit maintenue constante pendant un processus d'usinage.

**8.** Dispositif de coupe selon l'une quelconque des revendications précédentes, **caractérisé en ce que** le dispositif de coupe présente un appui (30) réalisé en trois dimensions pour la réception d'une pièce à usiner (W) formée en trois dimensions.

**9.** Procédé de réalisation d'un affaiblissement dans une pièce à usiner (W) en utilisant un dispositif de coupe, dans lequel le dispositif de coupe présente une unité de coupe (10) ainsi qu'une plaque de mesure (20a),

dans lequel l'unité de coupe (10) présente un dispositif de réception (14) pour le maintien d'un dispositif de coupe (15) ainsi qu'un capteur de mesure de distance (12),
dans lequel l'unité de coupe (10) est déplacée en tenant compte de la distance déterminée par le capteur de mesure de distance (12) par rapport à la plaque de mesure (20a) à l'aide d'une came de commande,
**caractérisé en ce que** le capteur de mesure de distance (12) est monté à une extrémité tournée vers la plaque de mesure (20a) du dispositif de réception (14), et le dispositif de coupe (15) est prévu à l'extrémité opposée du dispositif de réception (14).

**10.** Procédé selon la revendication 9, **caractérisé en ce que** l'affaiblissement est réalisé comme cavité continue ou comme affaiblissement de type à perforation dans la pièce à usiner (W).

**11.** Procédé selon l'une quelconque des revendications 9 à 10, **caractérisé en ce qu'**un déplacement d'étalonnage est réalisé pour la détermination de la came de commande, dans lequel un capteur d'étalonnage inductif est inséré dans le dispositif de coupe (15) pour la réception de la came de commande.

**12.** Procédé selon l'une quelconque des revendications 9 à 11, **caractérisé en ce qu'**une épaisseur de paroi résiduelle est déterminée sur la base de la formule suivante :

$$R_{w\,f(x,y)} = M_{const.\,f(x,y)} - (K_f + A_{m\,f(x,y)}),$$

dans lequel $R_{w\,f(x,y)}$ est l'épaisseur de paroi résiduelle liée à la position, $M_{const.\,f(x,\,y)}$ est une constante, $K_f$ est la distance entre la pointe d'un outil de coupe (16) reçu par le dispositif de coupe et le capteur de mesure de distance (12) et $A_{m\,f(x,y)}$ est la distance déterminée par le capteur de mesure de distance (12) par rapport à la plaque de mesure (20a).

**13.** Procédé selon la revendication 12, **caractérisé en ce que** le déplacement du dispositif de coupe est commandé de telle manière que l'épaisseur de paroi résiduelle soit maintenue constante pendant un processus d'usinage.

**14.** Procédé selon l'une quelconque des revendications 9 à 13, **caractérisé en ce que** la pièce à usiner (W) est un composant d'habillage interne en mousse, en particulier un tableau de bord en mousse.

Fig. 1

Fig. 2

20b

$A_m$

$M_{const.}$

$K_f$

12

11

14

15

16

25

25a

Fig. 3

20a

11

14

15

R_W

30    16    W

Fig. 4

Fig. 5

Fig. 6

15

16

W

$R_W$

30

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 20215558 U1
- FR 2965502 A1
- EP 1566314 A1
- DE 20314281 U1
- DE 102009054604 A1